(19) Europäisches Patentamt
European Patent Office
Office européen des brevets

(11) **EP 4 733 620 A1**

(12) **EUROPEAN PATENT APPLICATION**

(43) Date of publication:
**29.04.2026 Bulletin 2026/18**

(21) Application number: 24208263.4

(22) Date of filing: **23.10.2024**

(51) International Patent Classification (IPC):
**F16F 7/10** (2006.01)

(52) Cooperative Patent Classification (CPC):
**F16F 7/1028; F16F 7/1005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **Kim, Hyo sig**
 **High Point, 27265 (US)**
• **Bhat, Sindhoor**
 **581355 Siddapur (IN)**

(74) Representative: **Valea AB**
**Box 1098**
**405 23 Göteborg (SE)**

(54) **A VIBRATION CONTROL ARRANGEMENT FOR A VEHICLE**

(57) The present disclosure relates to a vibration control arrangement (300) for a vehicle component (200), comprising:
- a mass member (301) having a mass member centre of gravity (301'),
- a mass member connector (302), wherein a first mass member connector portion (303) of the mass member connector (302) is adapted to be connected to a portion of the vehicle component (200) whereby the mass member (301) is connected to the portion of the vehicle component (200) via at least a portion of the mass member connector (302), and
- a distance adjuster (304) adapted to vary an effective distance (L) between the first mass member connector portion (303) and the mass member centre of gravity (301') along the mass member connector (302) to thereby vary a natural frequency of the vibration control arrangement (300).

FIG. 2a

FIG. 2b

EP 4 733 620 A1

# Description

## TECHNICAL FIELD

The disclosure relates generally to vibration control. In particular aspects, the disclosure relates to a vibration control arrangement for a vehicle. The disclosure also relates to a vehicle, and a method for controlling a vibration control arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Vehicle vibrations arise from various sources such as engine operation, road irregularities, and mechanical imbalances, causing discomfort and potential damage to the vehicle. To mitigate these vibrations, various solutions have been employed. For instance, a shock absorber may absorb and damp shock impulses by converting kinetic energy of the shock into another form of energy. Moreover, a damper may be used to reduce the vibration.

## SUMMARY

According to a first aspect of the disclosure, a vibration control arrangement for a vehicle component is provided. The vibration control arrangement comprises:

- a mass member having a mass member centre of gravity,
- a mass member connector, wherein a first mass member connector portion of the mass member connector is adapted to be connected to a portion of the vehicle component whereby the mass member is connected to the portion of the vehicle component via at least a portion of the mass member connector, and
- a distance adjuster adapted to vary an effective distance between the first mass member connector portion and the mass member centre of gravity along the mass member connector to thereby vary a natural frequency of the vibration control arrangement.

The first aspect of the disclosure may seek to reduce vibration of vehicle components. A technical benefit may include that, by varying and tuning the natural frequency of the vibration control arrangement to, for instance, counteract the frequencies of vibrations encountered by vehicle components, amplitude of these vibrations may be effectively reduced. As a result, overall stability and longevity of the vehicle components may be enhanced.

Herein, the vibration control arrangement may be seen or modelled as a cantilever beam, a structural element that is supported at a first fixed end and free at the other end. In this model, the first mass member connector may be seen as the beam member. Moreover, the first mass member connector portion may be seen as the fixed end, while the mass member may represent the free end. Since the natural frequency of a cantilever beam may vary with its length, the natural frequency of the vibration control arrangement may be tuned by varying the effective distance between the first mass member connector portion and the mass member's center of gravity.

Optionally in some examples, including in at least one preferred example, the mass member has a mass being between 5% and 10% of the mass of the vehicle component. A technical benefit may include that, by selecting a mass within this range, the mass member may be substantial enough to effectively counteract and dampen vibrations without adding excessive weight to the vehicle.

Optionally in some examples, including in at least one preferred example, the mass member connector comprises a plurality of mass member connector portions at least partially enclosing the mass member, the effective distance corresponding to a circumferential distance along the plurality of mass member connector portions from the first mass member connector portion to the mass member centre of gravity.

Optionally in some examples, including in at least one preferred example, the mass member comprises one or more vehicle auxiliary components adapted to interact with the vehicle component, such as a heat exchanger. A technical benefit may include that by utilizing the vehicle's existing component to function as the mass member, it may reduce the need for additional components, thereby saving space and weight within the vehicle.

Optionally in some examples, including in at least one preferred example, the mass member is any one of an air tank, or a fuel tank. Anyone of these components may already be present in the vehicle or the vehicle component. By utilizing the vehicle's existing component, it may reduce the need for additional components, thereby saving space and weight within the vehicle.

Optionally in some examples, including in at least one preferred example, the distance adjuster comprises a linear actuator adapted to enable the mass member centre of gravity to move linearly relative to the first mass member connector portion. Generally, linear actuators may provide precise control over the movement, allowing for accurate varying of the effective distance and consequently the natural frequency of the vibration control arrangement. A technical benefit may include precise control of the natural frequency.

Optionally in some examples, including in at least one preferred example, the linear actuator is connected to the mass member via a connecting arm. The connecting arm may be preferably made of an elastic material with a predetermined Young's modulus, which may reduce stress concentration that would otherwise occur between the mass member and the linear actuator if they were connected directly. A technical benefit may include a reduced risk of damage to the mass member and/or the linear actuator.

Optionally in some examples, including in at least one preferred example, the linear actuator comprises a set of a circular gear and a linear gear adapted to convert a rotational motion of the circular gear into linear motion of the linear gear, and wherein the mass member is supported by the linear gear through the connecting arm. A technical benefit may include precise control of the effective distance/the natural frequency.

Optionally in some examples, including in at least one preferred example, the linear actuator comprises a rod member connected to the mass member via the connecting arm. A technical benefit may include precise control of the effective distance and thus of the natural frequency.

Optionally in some examples, including in at least one preferred example, the vibration control arrangement further comprises a control unit adapted to receive information indicative of a vibration level of the vehicle component, wherein the control unit is further adapted to issue control information to the distance adjuster on the basis of the received information. By using the received information to control the distance adjuster, a technical benefit may include automatic adjustment of the distance adjuster, which may adapt in real-time to a varying vibrational level e.g. in the vehicle component.

Optionally in some examples, including in at least one preferred example, the effective distance is adapted to be varied within a range between a minimum effective distance and a maximum effective distance. In this way, it may prevent the vibration control arrangement from operating outside its safe range, reducing the risk of failure or damage.

Optionally in some examples, including in at least one preferred example, the minimum effective distance is between 40% and 70% of the maximum effective distance.

According to a second aspect of the disclosure, a vehicle is provided. The vehicle comprises a vehicle component and the vibration control arrangement according to the first aspect of the disclosure. Advantages and technical benefits of the second aspect of the disclosure are largely analogous to the advantages and technical benefits of the first aspect of the disclosure.

Optionally in some examples, including at least one preferred example, the vehicle comprises a vehicle frame member and the vehicle component is a power assembly connected to the vehicle frame member.

According to a third aspect of the disclosure, a computer-implemented method for controlling a vibration control arrangement according to the first aspect is provided. The method comprises:

- receiving, by processing circuitry of a computer system, information indicative of a vibration level of the vehicle component, and
- issuing, by the processing circuitry, operation control information to the distance adjuster based on the received information.

By using the received information to control the distance adjuster, a technical benefit may include automatic adjustment of the distance adjuster, which may adapt to different vibrational levels of the vehicle component.

Optionally in some examples, including in at least one preferred example, the information comprises a first frequency value of the vibration of the vehicle component. Purely by way of example, the first frequency value may be indicative of a frequency at which the vehicle component vibrates.

Optionally in some examples, including in at least one preferred example, the method further comprises:

- in response to, preferably only in response to, the information indicating that the first frequency value, as compared to an initial first frequency value at first time instant, is higher than the initial first frequency value for a predetermined time after the first time instant, issuing, by the processing circuitry, operation control information to the distance adjuster to decrease the effective distance between the first mass member connector portion and the mass member centre of gravity along the mass member connector.

The method in accordance with the above may reduce the risk of unnecessary adjustments when there are minor, short-term vibrations that are not critical.

Optionally in some examples, including in at least one preferred example, the method further comprises:

- in response to the information indicating that that the first frequency value exceeds a frequency value threshold level, issuing, by the processing circuitry, operation control information to the distance adjuster to decrease the effective distance between the first mass member connector portion and the mass member centre of gravity along the mass member connector.

In this way, it may reduce the risk of unnecessary adjustments when there are minor, short-term vibrations that are not critical.

Optionally in some examples, including in at least one preferred example, the method further comprises:

- issuing, by the processing circuitry, operation control information to the distance adjuster to decrease the effective distance between the first mass member connector portion and the mass member centre of gravity along the mass member connector when a current first frequency value is higher than a previous first frequency value at an earlier time instant.

In this way, it may enable immediate response to high vibrations, despite the potential for more frequent adjustments.

Optionally in some examples, including in at least one preferred example, the method further comprises:

- receiving, by the processing circuitry, information indicative of a second frequency value of the vibration of the vibration control arrangement, and
- issuing, by the processing circuitry, operation control information to the distance adjuster to vary the effective distance between the at least one fixation member and the mass member, such that a difference between the second frequency value and the first frequency value is below a threshold level.

The method according to the above examples implies that the frequency of the vibration of the vibration control arrangement may be relatively close to the frequency of the vibration level of the vehicle component. This in turn implies that the vibration control arrangement may act as a counter-mass that may at least reduce the vibrations in the vehicle component. Purely by way of example, the information indicative of a second frequency value of the vibration of the vibration control arrangement may be determined using a sensor associated with the vibration control arrangement and/or may use a look-up table or the like with second frequency values for different effective distances between the first mass member connector portion and the mass member centre of gravity.

According to a fourth aspect of the disclosure, a computer program product is provided. The computer program product comprises program code for performing, when executed by the processing circuitry, the method according to the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method according to the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

FIG. 1 is a schematic side view of a vehicle according to an example.

FIG. 2a is a schematic side view of a vibration control arrangement according to an example.

FIG. 2b is schematic side view of a vibration control arrangement having a set of a circular gear and a linear gear according to an example.

FIG. 3 is a cantilever beam model.

FIG. 4a and FIG. 4b show cantilever beams with varying length.

FIG. 5 is an example of a linear actuator.

FIG. 6 is a schematic side view of another vibration control arrangement according to another example.

FIG. 8- FIG. 10 are flow charts illustrating a method of operating a vibration control arrangement.

FIG. 11 is a schematic diagram of an exemplary computer system for implementing methods disclosed herein.

## DETAILED DESCRIPTION

The detailed description set forth below provides information and examples of the disclosed technology with sufficient detail to enable those skilled in the art to practice the disclosure.

Vehicle vibrations arise from various sources such as engine operation, road irregularities, and mechanical imbalances, causing discomfort and potential damage to the vehicle. To mitigate these vibrations, various solutions have been employed. For instance, a shock absorber may absorb and damp shock impulses by converting kinetic energy of the shock into another form of energy. Moreover, a damper may be used to reduce the vibration.

The present disclosure may seek to reduce vibration of vehicle components. A technical benefit may include that, by varying and tuning the natural frequency of a vibration control arrangement to, for instance, counteract the frequencies of vibrations encountered by vehicle components, amplitude of these vibrations may be effectively reduced. As a result, overall stability and longevity of the vehicle components may be enhanced.

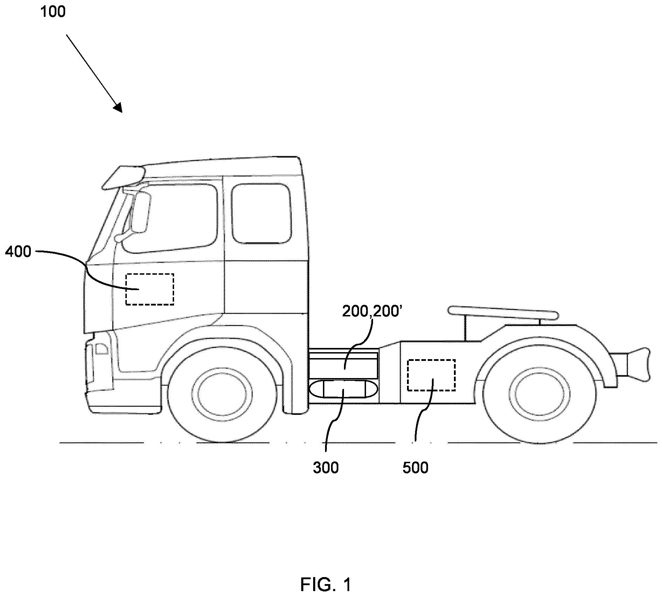

**Fig. 1** depicts a side view of a vehicle 100 according to an example. The vehicle 100 is here a truck, more specifically a heavy-duty truck for towing one or more trailers (not shown). Even though a heavy-duty truck 1 is shown it shall be noted that the disclosure is not limited to this type of vehicle but may be applicable for any other type of vehicle, such as a bus, construction equipment, e.g. a wheel loader or an excavator, and a passenger car.

The vehicle 100 may be a battery-powered or a hybrid vehicle, utilizing one or more electric motors 500 to provide a propulsion force to the vehicle 100. The vehicle 100 comprises an energy source that in turn comprises an electric energy source and a mechanical energy source. More specifically, the electric energy source may comprise a power pack assembly 200' that may in turn have a plurality of traction batteries for providing electric power to the one or more electric motors 500. The vehicle 100 may further comprise a cooling system for cooling these traction batteries. The cooling system may comprise a heat exchanger, which may be seen as a vehicle auxiliary component adapted to interact with the power pack assembly 200'. Moreover, the mechanical energy source comprises one or more air tank (not shown) for storing air or any suitable fluid used in vehicle's pneumatic systems. The heat exchanger or the air tank may both be regarded as vehicle auxiliary components. The power pack assembly 200' may be mounted on a vehicle frame member (not shown). When the vehicle 100 is in motion, the energy source, such as the power pack assembly 200' may experience significant vibrations, particularly influenced by road conditions.

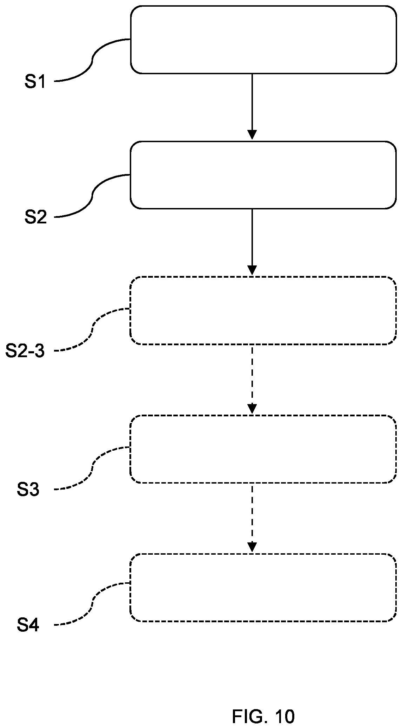

Furthermore, the vehicle 1 comprises a computer system 400, which may comprise one or more control units, such as processing circuitry 402 (see FIG. 10) that can issue control data for controlling various systems of the vehicle.

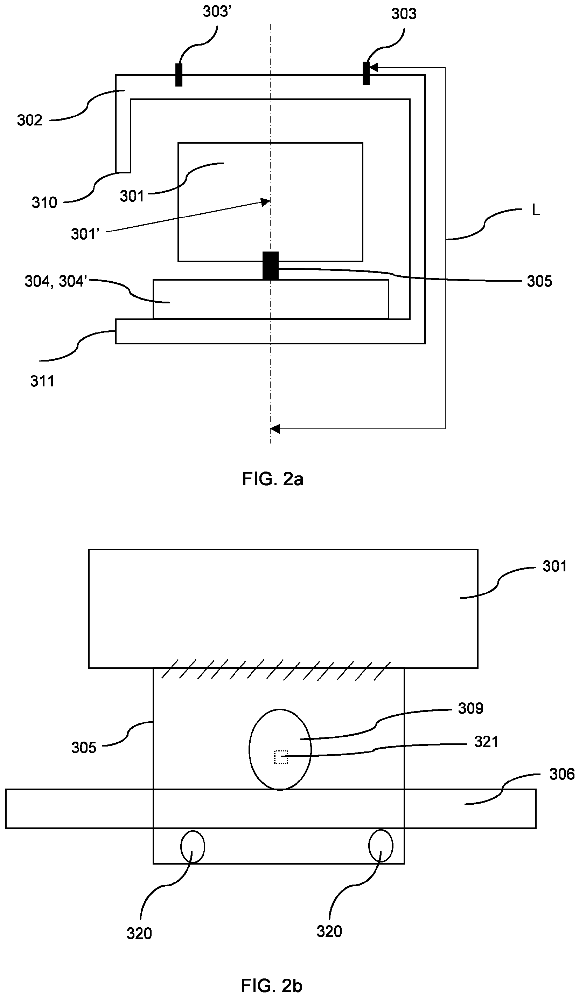

**FIG. 2a** shows a schematic side view of a vibration control arrangement 300 for a vehicle component 200, such as the FIG. 1 power pack assembly 200'. The vibration control arrangement 300 may be attached to the underside of the power pack assembly 200' (see FIG. 1), such as a floor of the assembly power pack assembly 200'.

As shown in **FIG. 2a,** the vibration control arrangement 300 comprises a mass member 302 having a mass member centre of gravity 301'. The mass member 301 may has a mass being between 5% and 10% of the mass of the vehicle component 200, such as the FIG. 1 power pack assembly 200'. For instance, the mass member 301 may be one or more vehicle auxiliary components adapted to interact with the vehicle component, such a heat exchanger. In the shown example, the heat exchanger has a weight of 20,4kg while the power pack assembly has a weight of 369 kg. Thus, in this example, the mass member 301 has a mass being 5.5% of the mass of the vehicle component 200. As another non-limiting example, the mass member 301 may be an air tank or a fuel tank.

The vibration control arrangement 300 further comprises a mass member connector 302. Moreover, a first mass member connector portion 303 of the mass member connector 302 is adapted to be connected to a portion of the vehicle component 200, such as the power pack assembly 200' shown in FIG. 1, whereby the mass member 301 is connected to the portion of the vehicle component 200 via at least a portion of the mass member connector 302. Purely by way of example, the first mass member connector portion 303 may comprise any suitable fixation member and the vibration control arrangement 300 may be connected to the floor of the power pack assembly 200' by the fixation member.

Moreover, the vibration control arrangement 300 comprises a distance adjuster 304 adapted to vary an effective distance L between the first mass member connector portion 303 and the mass member centre of gravity 301' along the mass member connector 302 to thereby vary a natural frequency of the vibration control arrangement 300.

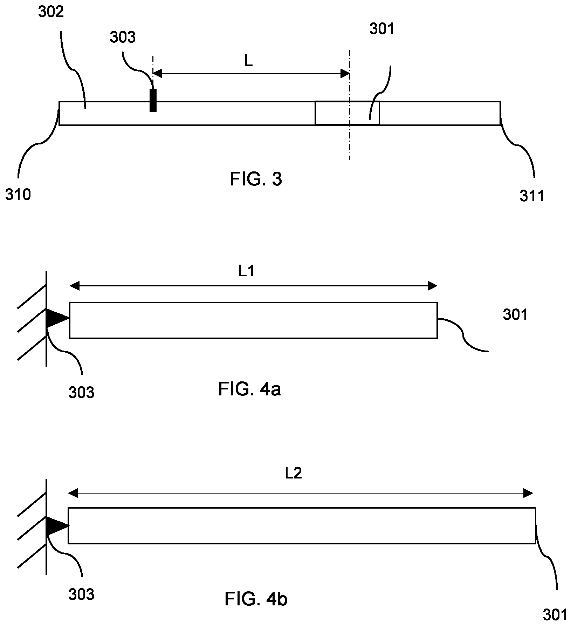

Herein, the vibration control arrangement 300 may be modelled as a cantilever beam, as shown in **FIG. 3- FIG. 4b,** a structural element that is supported at a first fixed end and free at the other end. In this model, the mass member connector 302 may be seen as a beam member extending between a first end 310 and a second end 311. Moreover, the first mass member connector portion 303 may be seen as the fixed end 303, while the mass member 301 may represent the free end 301. The natural frequency of the vibration control arrangement 300 may be formulated based on the theory of cantilever beam as:

$$ f = \frac{k}{2 \pi L^2} \sqrt{\frac{EI}{m}} $$

where k is a factor indicative of the order of the bending mode of the mass member connector 302, m is the equivalent mass of the mass member 301, E is the elastic modulus of the mass member connector 302, $I$ is the equivalent sectional moment of inertia of the mass member connector 302, and L is the effective distance L between the first mass member connector portion 303 and the mass member centre of gravity 301'.

Based on the above equation, it may be concluded that the natural frequency may vary based on the length of a beam member, or the effective distance L between the first mass member connector portion 303 and the mass member centre of gravity 301'. For instance, the length L1 of the FIG. 4a cantilever beam is shorter than the length L2 of the FIG. 4b cantilever beam, assuming all other parameters remain constant, the natural frequency of the cantilever beam in FIG. 4a is higher than that of the cantilever beam in FIG. 4b.

In some examples, the mass member connector 302 may have a predetermined bending stiffness. For instance, a natural frequency for a cantilever beam may also be expressed by the below equation:

$$f = \frac{1}{2\pi}\sqrt{\frac{K}{Meff + M}}$$

where K is the equivalent bending stiffness of a beam member, or the equivalent bending stiffness of the mass member connector 302, $M_{eff}$ is the effective mass of the beam member, or the mass member connector 302, and M is the mass of a mass member, e.g., the mass member 301. Moreover, the effective mass $M_{eff}$ of the beam may be calculated by:

$$Meff = \frac{1}{3}(\rho L W h)$$

where $\rho$ is the density of the beam member, L is the length of the beam member, W is the width of the beam member and h is the thickness of the beam member.

If an initial preferred natural frequency is set or predetermined, the bending stiffness of the mass member connector 302 may be predetermined accordingly. Thereafter, the natural frequency may be varied by the distance adjuster 304 as described above.

In some examples, such as the FIG. 2a example, the mass member connector 302 comprises a plurality of mass member connector portions at least partially enclosing the mass member 301. The effective distance L may correspond to a circumferential distance along the plurality of mass member connector portions from the first mass member connector portion 303 to the mass member centre of gravity 301'.

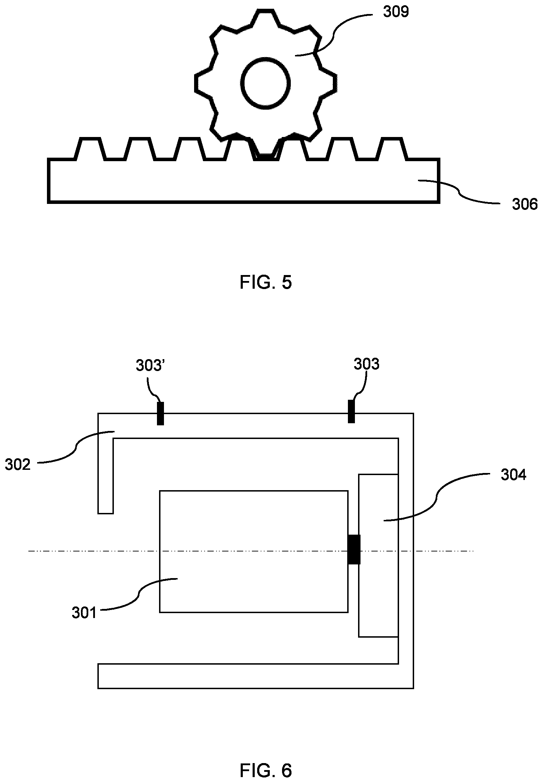

The distance adjuster 304 may be positioned at any suitable locations in the mass member connector 302. It may be positioned at the bottom of the mass member connector 302, as shown in **FIG. 2a,** or be positioned at side of the mass member connector 302, as shown in **FIG. 6.**

In some examples, the distance adjuster 304 comprises a linear actuator 304' adapted to enable the mass member centre of gravity 301' to move linearly relative to the first mass member connector portion 303, whereby the linear actuator 304' is connected to the mass member 301 via a connecting arm 305. Preferably, the connecting arm 305 may be made of an elastic material with a predetermined Young's modulus, which may reduce stress concentration that would otherwise occur between the mass member and the linear actuator if they were connected directly. The linear actuator 304' may for instance comprise a set of a circular gear 309 and a linear gear 306 adapted to convert a rotational motion of the circular gear 309 into linear motion of the linear gear 306, as presented in FIG. 5. **FIG. 2b** illustrates the mass member 301, the set of circular gear 309 and the linear gear 306. As shown in the figure, the mass member 301 may be connected to the linear gear 306 via the connecting arm 305, allowing it to move in tandem with the linear gear 306. The arrangement may also comprise a rotating device 321 configured to rotate the circular gear 309. When the circular gear 309 rotates, it may engage with the linear gear 306, converting the rotational motion of the circular gear 309 into linear motion of the linear gear 306. This linear motion is then transferred to the mass member via the connecting arm 305, causing the mass member 301 to move in the same direction as the linear gear 306. Moreover, the linear gear 306 may be supported by a pair of rollers 320 to ensure smooth and stable movement. In some other examples, the mass member 301 may be supported by the circular gear 309 through the connecting arm 305 and may be moved by the circular gear 309 instead.

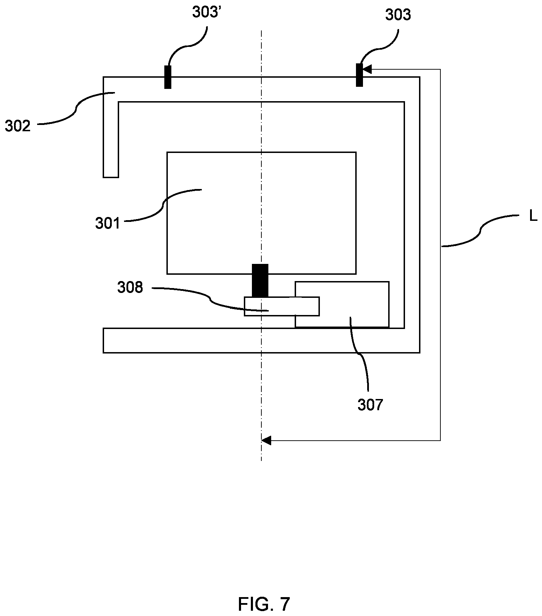

In some examples, the linear actuator 304' comprises a rod member 308, as shown in FIG. 7, connected to the mass member 301 through the connecting arm 305. Purely by way of example, the linear actuator 304' may comprise an electrical motor (not shown) and may be configured to convert rotational motion of the electrical motor into linear motion of the rod member 308. The mass member 301 may be moved by the rod member 308.

Irrespective of the type of the distance adjuster, the effective distance is preferably adapted to be varied within a range between a minimum effective distance and a maximum effective distance. In this way, it may prevent the vibration control arrangement 300 from operating outside its safe range, reducing the risk of failure or damage. Purely by way of example, the minimum effective distance is between 40% and 70% of the maximum effective distance. Purely by way of example, when the effective distance is varied by -10% to 10%, the natural frequency of the vibration control device may vary by -17,9% to 17.9%. The effective distance may be changed to any arbitrary value, allowing for flexible and precise adjustments based on real-time needs or preferences. Alternatively, it may be changed to a predetermined fixed value, which may allow for standardized settings.

Moreover, the vibration control arrangement 300 may further comprise a control unit 400, which may also be a computer system 400 shown in FIG. 1, adapted to receive information indicative of a vibration level of the vehicle component 200. The control unit 400 is further adapted to issue control information to the distance adjuster 304 on the basis of the received information.

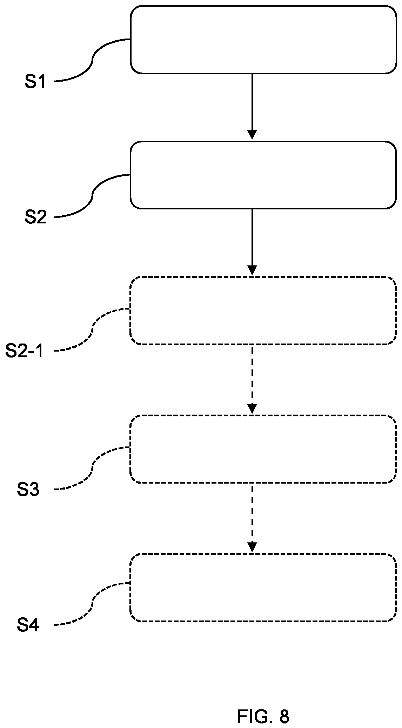

**FIG. 8- FIG. 10** are flow charts illustrating a method of operating a vibration control arrangement. The method may be performed by processing circuitry of a control unit, such as the control unit 400 of the vibration control arrangement 300, or processing circuitry of a computer system 400. The method comprises at least one of the actions listed in the following, which, unless otherwise indicated, may be taken in any suitable order.

S1: receiving information indicative of a vibration level of the vehicle component 200. Purely by way of example, such information may be received from a sensor adapted to measure vibrations of the vehicle component 200.

S2: issuing operation control information to the distance adjuster 304 based on the received information.

The information may preferably comprise a first frequency value of the vibration of the vehicle component 200. The information may be obtained upon request form the control unit 400 or may be obtained at regular or irregular time intervals without any prior request. Alternatively, the information may be continuously obtained whenever the vehicle on-board sensors, such as acceleration sensors, have new/updated information to provide to the control unit 400.

In some examples, the method may further comprise the following action, as shown in FIG. 8:
S2-1: in response to, preferably only in response to, the information indicating that the first frequency value, as compared to an initial first frequency value at first time instant, is higher than the initial first frequency value for a predetermined time after the first time instant, issuing operation control information to the distance adjuster 304 to decrease the effective distance L between the first mass member connector portion 303 and the mass member centre of gravity 301' along the mass member connector 302.

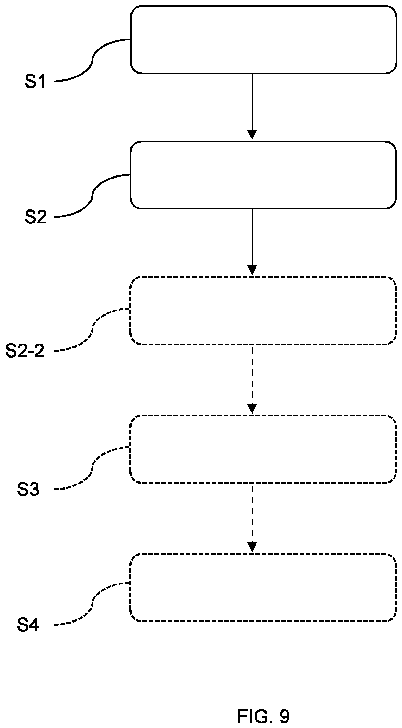

Alternatively, or additionally, the method may further comprise the following action, as shown in FIG. 9:
S2-2: in response to the information indicating that that the first frequency value exceeds a frequency value threshold level, issuing operation control information to the distance adjuster 304 to decrease the effective distance L between the first mass member connector portion 303 and the mass member centre of gravity 301' along the mass member connector 302.

Alternatively, the method may further comprise the following action, as shown in FIG. 10:
S2-3: issuing operation control information to the distance adjuster to decrease the effective distance L between the first mass member connector portion 303 and the mass member centre of gravity 301' along the mass member connector 302 when a current first frequency value is higher than a previous first frequency value at an earlier time instant.

In some examples, one or more acceleration sensors may continuously provide sensor data indicative of a vibration frequency of the component 200 such that the control unit 400 may continuously control the distance adjuster 304 to vary the effective distance L, for instance, with an increased first frequency value.

The method may further comprise:

S3: receiving information indicative of a second frequency value of the vibration of the vibration control arrangement, and

S4: issuing operation control information to the distance adjuster 304 to vary the effective distance between the at least one fixation member 303 and the mass member 301, such that a difference between the second frequency value and the first frequency value is below a threshold level.

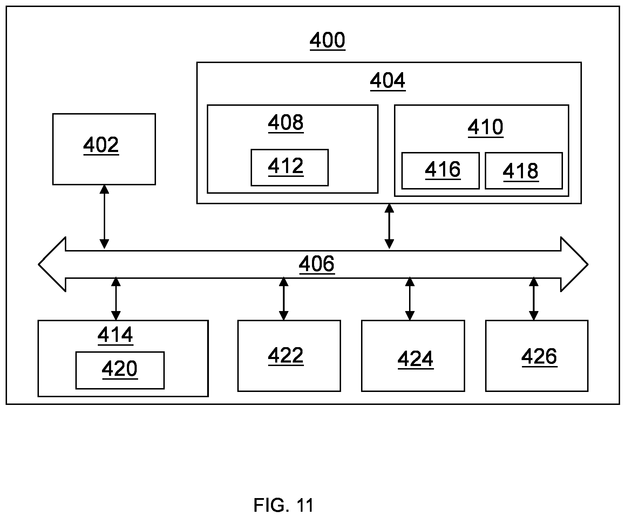

FIG 11. illustrates a computer system 400 for performing the method. Computer system 400 is adapted to execute instructions from a computer-readable medium to perform these and/or any of the functions or processing described herein. The computer system 400 may be connected e.g., networked) to other machines in a LAN, an intranet, an extranet, or the Internet. While only a single device is illustrated, the computer system 400 may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit ECU, processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406**. The computer system **400** may include at least one computing device having the processing circuitry **402**. The system bus **406** provides an interface for system components including, but not limited to, the memory **404** and the processing circuitry **402**. The processing circuitry **402** may include any number of hardware components for conducting data or signal processing or for executing computer code stored in memory **404**. The processing circuitry **402** may, for example, include a general-purpose processor, an application specific processor, a Digital Signal Processor DSP, an Application Specific Integrated Circuit ASIC, a Field Programmable Gate Array FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller, a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM, electrically erasable programmable read-only memory EEPROM, etc., and volatile memory **410** e.g., random-access memory RAM)), or any other medium which can be used to carry or store desired program code in the form of machine-executable instructions or data structures and which can be accessed by a computer or other machine with processing circuitry **402**. A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE or serial advanced technology attachment SATA, HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product e.g., readable storage medium storing the computer program **420** thereon, where at least a portion of a computer program **420** may be loadable e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE 1394 serial port, a Universal Serial Bus USB) port, an IR interface, and the like. The computer system **400** may include an output device interface **424** configured to forward output, such as to a display, a video display unit e.g., a liquid crystal display LCD or a cathode ray tube CRT. The computer system **400** may include a communications interface **426** suitable for communicating with a network as appropriate or desired.

Moreover, the present disclosure may be exemplified by any one of the below examples and combination of examples.

Example 1: A vibration control arrangement (300) for a vehicle component (200), the vibration control arrangement (300) comprising:

-   a mass member (301) having a mass member centre of gravity (301');
-   a mass member connector (302), wherein a first mass member connector portion (303) of the mass member connector (302) is adapted to be connected to a portion of the vehicle component (200) whereby the mass member (301) is connected to the portion of the vehicle component (200) via at least a portion of the mass member connector (302), and

- a distance adjuster (304) adapted to vary an effective distance (L) between the first mass member connector portion (303) and the mass member centre of gravity (301') along the mass member connector (302) to thereby vary a natural frequency of the vibration control arrangement (300).

Example 2: The vibration control arrangement (300) according to claim 1, wherein the mass member has a mass being between 5% and 10% of the mass of the vehicle component (200).

Example 3: The vibration control arrangement (300) according to any one of claims 1-2, wherein the mass member connector (302) comprises a plurality of mass member connector portions at least partially enclosing the mass member (301), the effective distance (L) corresponding to a circumferential distance along the plurality of mass member connector portions from the first mass member connector portion (303) to the mass member centre of gravity (301').

Example 4: The vibration control arrangement (300) according to any one of claims 1-3, wherein the mass member (301) comprises one or more vehicle auxiliary components adapted to interact with the vehicle component (200), such as a heat exchanger.

Example 5: The vibration control arrangement (300) according to any one of claims 1-4, wherein the mass member (301) is any one of an air tank, or a fuel tank.

Example 6: The vibration control arrangement (300) according to any one of the preceding claims, wherein the distance adjuster (304) comprises a linear actuator adapted to enable the mass member centre of gravity (301') to move linearly relative to the first mass member connector portion (303).

Example 7: The vibration control arrangement (300) according to claim 6, wherein the linear actuator (304') is connected to the mass member (301) via a connecting arm (305).

Example 8: The vibration control arrangement (300) according to claim 7, wherein the linear actuator (304') comprises a set of a circular gear (309) and a linear gear (306) adapted to convert a rotational motion of the circular gear (309) into linear motion of the linear gear (306), and wherein the mass member (301) is supported by the linear gear (306) through the connecting arm (305).

Example 9: The vibration control arrangement (300) according to claim 7, wherein the linear actuator (304') comprises a rod member (308) connected to the mass member (301) through the connecting arm (305).

Example 10: The vibration control arrangement (300) according to any one of the preceding claims further comprising a control unit (400) adapted to receive information indicative of a vibration level of the vehicle component (200), wherein the control unit (400) is further adapted to issue control information to the distance adjuster (304) on the basis of the received information.

Example 11: The vibration control arrangement (300) according to any one of the preceding claims, wherein the effective distance is adapted to be varied within a range between a minimum effective distance and a maximum effective distance, preferably the minimum effective distance is between 90% and 110% of the maximum effective distance

Example 12: A vehicle (100) comprises a vehicle component (200) and the vibration control arrangement (300) according to any one of the preceding claims.

Example 13: The vehicle (100) according to claim 12, wherein the vehicle comprises a vehicle frame member and the vehicle component (200) is a power assembly (200') connected to the vehicle frame member.

Example 14: A computer-implemented method for controlling a vibration control arrangement (300) according to any one of claims 1-11, the method comprising:

- receiving (S1), by processing circuitry of a computer system (400), information indicative of a vibration level of the vehicle component (200), and
- issuing (S2), by the processing circuitry, operation control information to the distance adjuster (304) based on the received information.

Example 15: The method according to claim 14, wherein the information comprises a first frequency value of the vibration of the vehicle component (200).

Example 16: The method according to claim 15, further comprising:

- in response to, preferably only in response to, the information indicating that the first frequency value, as compared to an initial first frequency value at first time instant, is higher than the initial first frequency value for a predetermined time after the first time instant, issuing (S2-1), by the processing circuitry, operation control information to the distance adjuster (304) to decrease the effective distance (L) between the first mass member connector portion (303) and the mass member centre of gravity (301') along the mass member connector (302).

Example 17: The method according to claim 15, comprising:

- in response to the information indicating that that the first frequency value exceeds a frequency value threshold level, issuing (S2-2), by the processing circuitry, operation control information to the distance adjuster (304) to decrease the effective distance (L) between the first mass member connector portion (303) and the mass member centre of gravity (301') along the mass member connector (302).

Example 18: The method according to claim 15, comprising:

- issuing (S2-3), by the processing circuitry, operation control information to the distance adjuster (304) to decrease the effective distance (L) between the first mass member connector portion (303) and the mass member centre of gravity (301') along the mass member connector (302) when a current first frequency value is higher than a previous first frequency value at an earlier time instant..

Example 19: The method according to any one of claims 15-18, further comprising:

- receiving (S3), by the processing circuitry, information indicative of a second frequency value of the vibration of the vibration control arrangement, and
- issuing (S4), by the processing circuitry, operation control information to the distance adjuster (304) to vary the effective distance between the at least one fixation member (303) and the mass member (301), such that a difference between the second frequency value and the first frequency value is below a threshold level.

Example 20: A computer program product comprising program code for performing, when executed by the processing circuitry, the method of any one of claims 14-19.

Example 21: A non-transitory computer-readable storage medium comprising instructions, which when executed by the processing circuitry, cause the processing circuitry to perform the method of any one of claims 14-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A vibration control arrangement (300) for a vehicle component (200), the vibration control arrangement (300) comprising:

   - a mass member (301) having a mass member centre of gravity (301'),
   - a mass member connector (302), wherein a first mass member connector portion (303) of the mass member connector (302) is adapted to be connected to a portion of the vehicle component (200) whereby the mass member (301) is connected to the portion of the vehicle component (200) via at least a portion of the mass member connector (302), and
   - a distance adjuster (304) adapted to vary an effective distance (L) between the first mass member connector portion (303) and the mass member centre of gravity (301') along the mass member connector (302) to thereby vary a natural frequency of the vibration control arrangement (300).

2. The vibration control arrangement (300) according to claim 1, wherein the mass member has a mass being between 5% and 10% of the mass of the vehicle component (200).

3. The vibration control arrangement (300) according to any one of claims 1-2, wherein the mass member connector (302) comprises a plurality of mass member connector portions at least partially enclosing the mass member (301), the effective distance (L) corresponding to a circumferential distance along the plurality of mass member connector portions from the first mass member connector portion (303) to the mass member centre of gravity (301').

4. The vibration control arrangement (300) according to any one of claims 1-3, wherein the mass member (301) comprises one or more vehicle auxiliary components adapted to interact with the vehicle component (200), such as a heat exchanger.

5. The vibration control arrangement (300) according to any one of claims 1-4, wherein the mass member (301) is any one of an air tank, or a fuel tank.

6. The vibration control arrangement (300) according to any one of the preceding claims, wherein the distance adjuster (304) comprises a linear actuator adapted to enable the mass member centre of gravity (301') to move linearly relative to the first mass member connector portion (303).

7. The vibration control arrangement (300) according to claim 6, wherein the linear actuator (304') is connected to the mass member (301) via a connecting arm (305).

8. The vibration control arrangement (300) according to claim 7, wherein the linear actuator (304') comprises a set of a circular gear (309) and a linear gear (306) adapted to convert a rotational motion of the circular gear (309) into linear motion of the linear gear (306), and wherein the mass member (301) is supported by the linear gear (306) through the connecting arm (305).

9. The vibration control arrangement (300) according to claim 7, wherein the linear actuator (304') comprises a rod member (308) connected to the mass member (301) through the connecting arm (305).

10. The vibration control arrangement (300) according to any one of the preceding claims further comprising a control unit (400) adapted to receive information indicative of a vibration level of the vehicle component (200), wherein the control unit (400) is further adapted to issue control information to the distance adjuster (304) on the basis of the received information.

11. The vibration control arrangement (300) according to any one of the preceding claims, wherein the effective distance is adapted to be varied within a range between a minimum effective distance and a maximum effective distance, preferably the minimum effective distance is between 40% and 70% of the maximum effective distance.

12. A vehicle (100) comprises a vehicle component (200) and the vibration control arrangement (300) according to any one of the preceding claims.

13. A computer-implemented method for controlling a vibration control arrangement (300) according to any one of claims 1-11, the method comprising:

    - receiving (S1), by processing circuitry of a computer system (400), information indicative of a vibration level of the vehicle component (200), and
    - issuing (S2), by the processing circuitry, operation control information to the distance adjuster (304) based on the received information.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.

FIG. 1

303'                              303

302

310        301

301'

304, 304'                                              305

311

FIG. 2a

301

309

305                                      321

306

320        320

FIG. 2b

L

302

303

301

L

FIG. 3

310

311

L1

301

303

FIG. 4a

L2

303

FIG. 4b

301

309

306

FIG. 5

303'     303

302

304

301

FIG. 6

FIG. 7

S1

S2

S2-1

S3

S4

FIG. 8

S1

S2

S2-2

S3

S4

FIG. 9

S1

S2

S2-3

S3

S4

FIG. 10

FIG. 11

<table>
<tr><td>Europäisches<br>Patentamt<br>European<br>Patent Office<br>Office européen<br>des brevets</td><td>**EUROPEAN SEARCH REPORT**</td><td>**Application Number**<br><br>**EP 24 20 8263**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 225605 B2 (YANMAR CO LTD) 3 July 2013 (2013-07-03) | 1-4,6-15 | INV. F16F7/10 |
| A | * figure 8 * * paragraph [0036] * | 5 | |
| A | JP S59 50243 A (NIPPON KOKAN KK) 23 March 1984 (1984-03-23) * the whole document * | 1-15 | |

**TECHNICAL FIELDS SEARCHED (IPC)**

F16F

The present search report has been drawn up for all claims

| Place of search | Date of completion of the search | Examiner |
|---|---|---|
| The Hague | 11 March 2025 | Beaumont, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8263

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | | Publication date | Patent family member(s) | | Publication date |
|---|---|---|---|---|---|
| JP 5225605 | B2 | 03-07-2013 | JP | 5225605 B2 | 03-07-2013 |
| | | | JP | 2008265379 A | 06-11-2008 |
| JP S5950243 | A | 23-03-1984 | JP | H037816 B2 | 04-02-1991 |
| | | | JP | S5950243 A | 23-03-1984 |

EPO FORM P0459

For more details about this annex : see Official Journal of the European Patent Office, No. 12/82